# EUROPÄISCHE PATENTSCHRIFT

(11) **EP 3 353 092 B1**
(45) Veröffentlichungstag und Bekanntmachung des Hinweises auf die Patenterteilung: **16.10.2019**
(21) Anmeldenummer: 16754480.8
(22) Anmeldetag: 17.08.2016
(51) Int. Cl.: B65D 85/804, A47J 31/44, A47J 31/60

(54) **KAPSEL ZUR REINIGUNG EINER GETRÄNKEZUBEREITUNGSMASCHINE UND VERFAHREN ZUM REINIGEN EINER BRÜHKAMMER**
CAPSULE FOR CLEANING A BEVERAGE PREPARATION MACHINE AND METHOD FOR CLEANING A BREWING CHAMBER
CAPSULE DE NETTOYAGE D'UNE MACHINE DE PRÉPARATION DE BOISSONS ET PROCÉDÉ DE NETTOYAGE D'UNE CHAMBRE À INFUSION

(30) Priorität: 23.09.2015 DE 102015116088; 10.03.2016 DE 102016104407
(43) Veröffentlichungstag der Anmeldung: 01.08.2018
(73) Patentinhaber: Melitta Single Portions GmbH & Co. KG, 32425 Minden (DE)
(72) Erfinder: VORFELD, Udo, 32051 Herford (DE); PAHNKE, Jan, 32427 Minden (DE)
(74) Vertreter: Dantz, Jan Henning
(86) Internationale Anmeldenummer: PCT/EP2016/069499
(87) Internationale Veröffentlichungsnummer: WO 2017/050492

(56) Entgegenhaltungen:
- EP-A1- 2 604 547
- EP-A2- 2 510 805
- WO-A1-2014/020492
- WO-A2-2013/188246
- WO-A2-2015/006367
- DE-U1-202005 021 174

## Beschreibung

Die vorliegende Erfindung betrifft eine Kapsel zur Reinigung einer Brühkammer einer Getränkezubereitungsmaschine, mit einem Behälter, der an einer Oberseite über eine lösbare Abdeckung verschlossen ist und mindestens ein Reinigungsmittel enthält, sowie ein Verfahren zum Reinigen einer Brühkammer einer Getränkezubereitungsmaschine.

Die DE 10 2012 011 204 A1 offenbart einen Behälter für die Einbringung in die Kapselaufnahme einer Getränkemaschine, wobei in dem Behälter ein Reinigungsmittel vorgesehen ist. Der Behälter ist dabei verschlossen und wird für den Reinigungsvorgang eingeschnitten oder durchstochen, um heißes Wasser in die Kapsel einzuführen. Bei Übersteigen eines vorbestimmten Druckes wird dann das aufgelöste Reinigungsmittel über Öffnungen aus der Kapsel in eine Brühkammer der Getränkemaschine gespült und kann dort für eine Reinigung sorgen. Bei dieser Kapsel ist nachteilig, dass bei dieser bei einem versehentlichen Öffnen das Reinigungsmittel austreten kann. Zudem ist diese Kapsel nur für Maschinen einsetzbar, bei denen Mittel zum Durchstoßen oder Einschneiden der Kapsel vorgesehen sind. Dadurch kann eine Dosierung des Reinigungsmittels nur schwer eingestellt werden.

Die WO2014/128205 offenbart eine Portionskapsel mit einem Basiselement aus einem flüssigkeitsundurchlässigen Material in dem ein Hüllenelement mit einem Rohmaterial angeordnet ist. An dem Basiselement kann über einer Öffnung eine abziehbare Dichtfolie vorgesehen sein.

Aus der WO2015/006367 ist ein Behälter mit einem Reinigungsmittel bekannt, der in einer Maschine zur Getränkezubereitung zur Reinigung eingesetzt werden kann. An dem Behälter kann eine wasserdurchlässige Abdeckung befestigt sein, um einen Zugang zu dem Reinigungsmittel herzustellen. Die Abdeckung verschließt dabei eine Öffnung des Behälters und und verhindert, dass das Reinigungsmittel aus der Öffnung entweichen kann. Eine weitere Abdeckung der Öffnung ist nicht vorgesehen.

Es ist daher Aufgabe der vorliegenden Erfindung, eine Kapsel zur Reinigung einer Brühkammer einer Getränkezubereitungsmaschine und ein Verfahren zum Reinigen einer Brühkammer einer Getränkezubereitungsmaschine zu schaffen, die eine einfache und sichere Handhabung des Reinigungsvorganges gewährleisten und eine genaue Dosierung des Reinigungsmittels ermöglichen.

Diese Aufgabe wird mit einer Kapsel mit den Merkmalen des Anspruches 1 sowie einem Verfahren zum Reinigen einer Brühkammer mit den Merkmalen des Anspruches 7 gelöst.

Die erfindungsgemäße Kapsel umfasst einen Behälter, der an einer Seite über eine lösbare Abdeckung verschlossen ist und mindestens ein Reinigungsmittel enthält, wobei an dem Behälter unterhalb der Abdeckung ein Sieb oder Gitter oder auch eine wasserlösliche Folie vorgesehen ist, mittels dem das Reinigungsmittel innerhalb des Behälters gehalten ist. Das Sieb, Gitter oder die wasserlösliche Folie überdecken dabei eine Öffnung des Behälters und sind an dem nach außen hervorstehenden Rand fixiert. Dadurch kann der Benutzer vor dem Reinigungsvorgang die Abdeckung entfernen, um die Kapsel an der Getränkezubereitungsmaschine einzulegen. Das Reinigungsmittel kann aufgrund des Siebes oder Gitters oder der wasserlöslichen Folie nicht aus der Kapsel herausfallen, so dass eine sichere Handhabung gewährleistet wird, auch wenn die Öffnung des Behälters nicht oben angeordnet ist, da der Benutzer geschützt vor dem Reinigungsmittel agiert. Durch das Lösen der Abdeckung wird lediglich ein Zugang zu dem Sieb oder Gitter oder der wasserlöslichen Folie geschaffen, das das Reinigungsmittel in dem Behälter hält, und dann ein Durchspülen der Kapsel mit einer Flüssigkeit, beispielsweise heißem Wasser, ermöglicht.

Das Sieb oder Gitter ist daher vorzugsweise wasserdurchlässig, um ein Auflösen des Reinigungsmittels durch Einströmen von Wasser in den Behälter zu ermöglichen. Dadurch wird eine vergleichsweise genaue Dosierung gewährleistet, da das Auflösen des Reinigungsmittels in einem vorbestimmten Ablauf erfolgt.

Das Reinigungsmittel kann beispielsweise als Reinigungstablette ausgebildet sein. In der Reinigungstablette können mehrere Wirkstoffe enthalten sein, die beim Auflösen zeitversetzt nacheinander wirksam werden. Um den Auflösevorgang zu beschleunigen, kann das Reinigungsmittel auch pulverförmig oder als Granulat in dem Behälter angeordnet sein.

Die Kapsel kann mindestens ein Identifizierungsmittel mit einer Eintrittsfläche und einer Austrittsfläche für Licht aufweisen, so dass eine Getränkezubereitungsmaschine erkennen kann, ob es sich um eine Kapsel mit einem Reinigungsmittel oder eine Kapsel mit einem Extraktionsgut zur Herstellung eines Getränkes handelt. Die Identifizierungsmittel können dabei an einem Boden des Behälters vorgesehen sein. Dies ermöglicht einen automatischen Start eines Reinigungsprogrammes nach dem Einlegen der Kapsel.

Bei dem erfindungsgemäßen Verfahren zum Reinigen einer Brühkammer einer Getränkezubereitungsmaschine wird zunächst eine Abdeckung an einer Kapsel mit dem Reinigungsmittel entfernt, um die Kapsel dann an oder in der Brühkammer zu positionieren. Anschließend wird heißes Wasser in die Brühkammer eingebracht und das Reinigungsmittel in der Kapsel aufgelöst. Das aufgelöste Reinigungsmittel kann dann in der Brühkammer einwirken. Anschließend wird die Brühkammer gespült. Dadurch kann eine gezielte Dosierung des Reinigungsmittels erfolgen, und die Handhabung beim Reinigen der Brühkammer ist fehlerunanfällig.

Das Einbringen des heißen Wassers erfolgt dabei nicht durch einen Zuführkanal, der in die Kapsel injiziert wird, sondern durch einen Zulauf an der Brühkammer, insbesondere an einer Oberseite der Brühkammer. Die Wasserzuführung erfolgt somit drucklos, so dass die Anforderungen an die Dichtungen zur Abdichtung der Kapsel verglichen mit einer Reinigung mit höherem Druck als den Umgebungsdruck geringer sind.

Die Einwirkzeit des aufgelösten Reinigungsmittels nach dem Einbringen des heißen Wassers beträgt vorzugsweise mindestens 1 Minute, insbesondere zwischen 2 Minuten und 6 Minuten. Es ist auch möglich, die Einwirkzeit noch länger auszugestalten. Durch die im Vergleich zu einem Durchströmen von Reinigungsmittel lange Einwirkzeit kann die Dosierung des Reinigungsmittels gering gehalten werden, da das gelöste Reinigungsmittel für den Reinigungsvorgang mehr Zeit hat als bei einer Reinigung im Durchlaufverfahren. Während der Einwirkzeit kann dabei der Füllstand des in Wasser gelösten Reinigungsmittels in der Brühkammer im Wesentlichen konstant sein. Dadurch können alle zu reinigenden Bereiche vollflächig erreicht werden, insbesondere auch bei Brühkammern mit einem Volumen größer oder gleich 100ml.

Vorzugsweise erfolgt das Spülen der Kammer mit der an oder in der Brühkammer positionierten Kapsel. Dadurch wird die Brühkammer beim Auflösen des Reinigungsmittels gefüllt und kann dann gereinigt werden. Die Kapsel wird dabei nicht perforiert und das Einbringen von heißem Wasser erfolgt über das Sieb, Gitter oder die zumindest teilweise aufgelöste Folie. Da die Kapsel nicht durch ein Einstechen perforiert wird, treten auch keine Dichtigkeitsprobleme an der Perforation auf. Die Kapsel wird gegenüber der Brühkammer nur im Bereich des Randes abgedichtet.

Das Reinigungsmittel kann dann mindestens zwei Wirkstoffe enthalten, die zeitversetzt nacheinander aufgelöst werden. Dadurch kann die Reinigungsleistung verbessert werden. Die Endspülung kann nach dem Auswurf der Kapsel erfolgen.

Die Kapsel wird vorzugsweise an einer seitlichen Öffnung an der Brühkammer positioniert. Vor oder nach dem Positionieren der Kapsel kann dann eine automatische Erkennung der Kapsel mittels einer Lichtquelle und mindestens eines Lichtdetektors erfolgen, die mit Identifizierungsmitteln an der Kapsel zusammenwirken. Durch die Erkennung der Kapsel kann dann ein automatisches Reinigungsprogramm gestartet werden.

Die Erfindung wird nachfolgend anhand eines Ausführungsbeispiels mit Bezug auf die beigefügten Zeichnungen näher erläutert. Es zeigen:
- Figur 1: eine schematische Ansicht einer erfindungsgemäßen Getränkezubereitungsmaschine mit eingelegter Kapsel;
- Figur 2: eine schematische Ansicht einer Kapsel mit einer Einrichtung zur Erkennung der Kapsel, und
- Figuren 3A und 3B: zwei Ansichten einer erfindungsgemäßen Kapsel zur Reinigung einer Getränkezubereitungsmaschine.

Eine Vorrichtung 1 zur Zubereitung von Brühgetränken umfasst einen herausnehmbaren Sammelbehälter 2, der in einem Gehäuse angeordnet ist. An dem Sammelbehälter 2 ist eine Auflage 3 mit Öffnungen zum Abstellen eines Gefäßes 4 angeordnet. Unterhalb der Auflage 3 ist ein Griffabschnitt 5 zum Herausziehen des Sammelbehälters 2 vorgesehen.

Die Vorrichtung 1 zur Zubereitung von Brühgetränken umfasst ferner eine Brühkammer 6, die neben einem Einwurfschacht 7 für Kapseln vorgesehen ist.

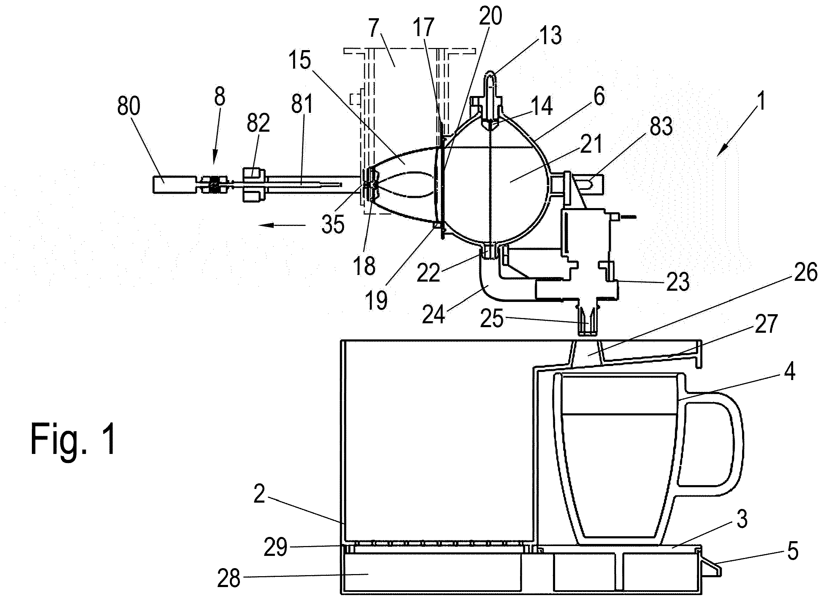

Wie in Figur 1 gezeigt ist, befindet sich der Einwurfschacht 7 für Kapseln zwischen der Brühkammer 6 und einer Antriebseinrichtung 8. Über die Antriebseinrichtung 8 kann die Brühkammer 6 relativ zu dem Einwurfschacht 7 verfahren werden. Hierfür ist ein Elektromotor 80 vorgesehen, der über ein Getriebe eine Spindel 81 antreibt, auf der eine Spindelmutter 82 drehfest gelagert ist. Durch Drehen der Spindel 81 werden mit der Spindelmutter 82 verbundene Arme entlang einer Führung 83 linear verfahren. Die Arme umgreifen die Brühkammer 6 an gegenüberliegenden Seiten und können diese linear bewegen.

Die Vorrichtung 1 zur Zubereitung von Brühgetränken umfasst ferner einen nicht dargestellten Tank für Frischwasser, der abnehmbar ausgebildet sein kann. Der Tank ist mit einer Pumpe verbunden, mittels der Wasser zu einer Heizeinrichtung gefördert wird, die mit einer Einlassleitung 13 oberhalb der Brühkammer 6 verbunden ist.

In dem Einwurfschacht 7 ist eine Kapsel 15 angeordnet, die topfförmig ausgebildet ist und an einer Seite eine Öffnung aufweist, die mit einem Sieb verschlossen ist. Das Sieb 31 ist dabei an einem Rand 16 fixiert, der asymmetrisch ausgebildet ist und an einer Seite einen hervorstehenden Abschnitt 17 mit einem Positionierungsmittel aufweist. Die Kapsel 15 wird dadurch in einer vorbestimmten Position und Ausrichtung in den Einwurfschacht 7 eingeworfen, der eine entsprechende Aussparung mit Führungsmitteln für die Positionierung der Kapsel 15 aufweist. Auf der zur Öffnung gegenüberliegenden Seite weist die Kapsel 15 einen Boden 18 auf, an dem Markierungen zur Identifizierung der Kapsel 15 angeordnet sind. Durch ein Auslesen der Codierung der Kapsel 15 an der Vorrichtung kann über eine Steuerung die Füllmenge an heißem Wasser für die Brühkammer 6, die Temperatur und die Verweilzeit eingestellt werden. Auch die Steuerung anderer Parameter über die Codierung ist möglich.

Für den Brühvorgang wird die Kapsel 15 zunächst in den Einwurfschacht 7 eingefügt. Die Kapsel 15 gleitet nach unten, bis sie an einer seitlichen Öffnung der Brühkammer 6 angeordnet ist. Hierfür sind an der Außenseite der Brühkammer 6 Halter 19 vorgesehen, die verhindern, dass die Kapsel 15 nach unten herausrutscht. In Figur 1 ist die Brühposition gezeigt, in die die Brühkammer 6 nach dem Einwerfen der Kapsel 15 über den Elektromotor 80 verfahren wird, wie dies mit dem Pfeil dargestellt ist. Dadurch wird eine Dichtung benachbart zu der Öffnung an der Brühkammer 6 gegen den Rand 16 der Kapsel 15 gedrückt. Die Kapsel 15 und ein Innenraum 21 der Brühkammer 6 bilden somit eine Einheit, wobei der Innenraum 21 der Brühkammer 6 und das Innere der Kapsel 15 durch das Sieb 31 voneinander getrennt sind. Der Innenraum 21 der Brühkammer 6 ist dabei ein Vielfaches größer als ein Innenraum der Kapsel 15, beispielsweise um mehr als vier Mal so groß, so dass das Brühgetränk sich vorwiegend in der Brühkammer 6 befindet und nur ein kleinerer Teil in der Kapsel 15, was das Ausgeben des Brühgetränkes vereinfacht.

In der Brühposition wird nun über die Einlassleitung 13 heißes Wasser aus der Heizeinrichtung in die Brühkammer 6 eingeleitet, wobei hierfür am Ende der Einlassleitung 13 eine Düse 14 vorgesehen ist, die mit einer Spitze in den Innenraum 21 der Brühkammer 6 hervorsteht. Die Brühkammer 6 ohne Kapsel kann ein Volumen zwischen 0,1 bis 1,0 I, insbesondere 0,15 bis 0,7 I besitzen, je nach Anzahl der herzustellenden Brühgetränke. Die Brühkammer 6 weist am unteren Ende einen Auslass 22 auf, der über eine Leitung 24 mit einem Ventil 23 verbunden ist. Durch Schließen des Ventils 23 wird das eingeleitete heiße Wasser in der Brühkammer 6 gesammelt und steigt über den Auslass 22 an, um das in der Kapsel 15 enthaltene Material zum Brühen eines Getränkes, insbesondere Tee, zu erreichen. Durch ein vorheriges Auslesen der Codierung an der Kapsel 15 durch ein Lesegerät 35 kann über die Steuerung die Zubereitung des Brühgetränkes individuell angepasst werden, beispielsweise kann grüner Tee anders zubereitet werden als schwarzer Tee, Früchtetee oder ein anderes Brüh- oder Aufgussgetränk.

Nach dem Brühvorgang kann das Ventil 23 geöffnet werden, damit das Brühgetränk aus der Brühkammer 6 über den Auslass 22, die Leitung 24 in einen Auslassstutzen 25 strömt, von dem es in ein Gefäß 4 eingeleitet wird. Zwischen dem Auslassstutzen 25 und dem Gefäß 4 befindet sich eine Durchführung 26 bzw. eine Öffnung, so dass das heiße Getränk ungehindert in das Gefäß 4 einströmen kann. Nach der Zubereitung des Brühgetränks kann das Ventil 23 wieder geschlossen werden.

Nach der Getränkeausgabe kann die Brühkammer 6 über die Antriebseinrichtung 8 weg von der Kapsel 15 verfahren werden, so dass die Kapsel 15 aus der Halteposition benachbart zu der seitlichen Öffnung 20 an der Brühkammer 6 entfernt wird und nach unten herabfällt. Die Kapsel 15 fällt dabei in den Sammelbehälter 2 auf ein Sieb 29 oder ein Gitter, das oberhalb eines Sammelbeckens 28 angeordnet ist. Durch das Verfahren der Brühkammer 6 werden gleichzeitig auch die Leitung 24 und der Auslassstutzen 25 verfahren, der nun nicht mehr über der Durchführung 26, sondern über einem Leitelement 27 angeordnet ist. Nun können die Brühkammer 6 und alle weiteren mit Tee benetzten Leitungen gespült werden, indem heißes Wasser aus der Heizeinrichtung über die Düse 14 in die Brühkammer 6 eingespritzt wird, so dass das heiße Wasser Rückstände des Brühvorganges entfernen kann. Das heiße Wasser kann dabei teilweise durch die Öffnung 20 in den Sammelbehälter 2 direkt eingeleitet werden und wird ansonsten über den Auslass 22 und die Leitung 24 in den Auslassstutzen 25 eingeleitet. Von dort gelangt das Spülwasser auf das Leitelement 27, das als schräger Boden oberhalb des Gefäßes 4 ausgebildet ist. Über das Leitelement 27 gelangt das Spülwasser in das Sammelbecken 28 des Sammelbehälters 2. Das Leitelement 27 kann statt als schräger Boden auch als Kanal oder Rinne ausgebildet sein.

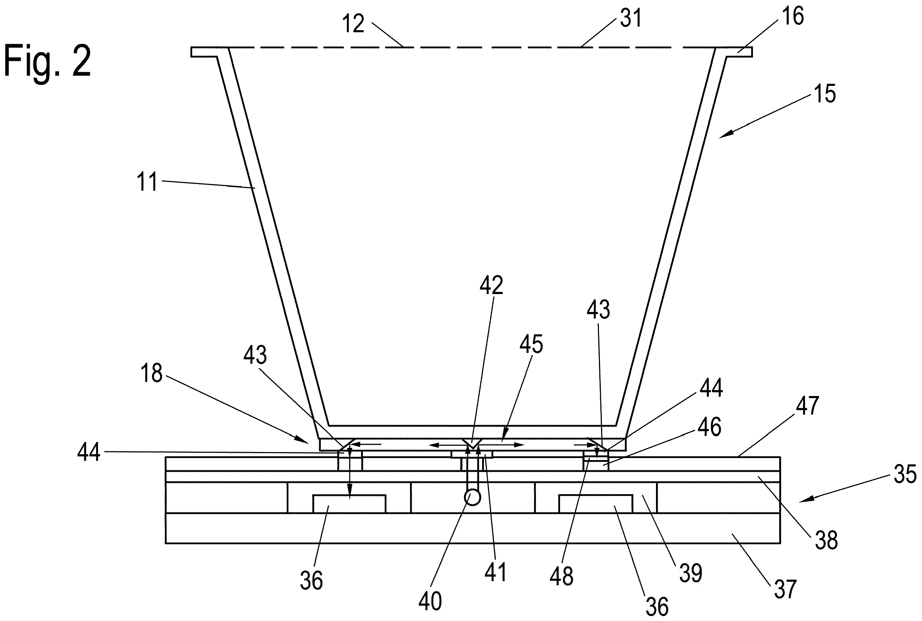

In Figur 2 ist eine Kapsel 15 schematisch dargestellt, die an dem Lesegerät 35 angeordnet ist. Die Kapsel 15 weist an einer Seitenwand 11 einen oberen Rand 16 auf, an dem eine Kapselöffnung 12 vorgesehen ist. Die Kapselöffnung 12 ist an einer Oberseite durch ein Sieb 31 verschlossen, so dass eine extrahierbare Substanz nicht aus der Kapsel 15 entweichen kann. Bei der topfförmigen Kapsel 15 werden die Begriffe "oben" und "unten" entsprechend der Darstellung in Figur 2 verwendet, wobei die Kapsel 15 im Gebrauch natürlich in jeder anderen gedrehten Position eingesetzt werden kann.

Auf der zur Kapselöffnung 12 gegenüberliegenden Seite ist an dem Boden 18 das Lesegerät 35 vorgesehen. Das Lesegerät 35 umfasst eine Lichtquelle 40, die mittig an dem Boden 18 angeordnet ist. Von der Lichtquelle 40 wird Licht an einer Eintrittsfläche 41 in der Mitte des Bodens 18 eingestrahlt, die in Lichtleiter 45 verteilt wird. Hierfür ist eine erste mittig angeordnete Lichtumlenkvorrichtung 42 vorgesehen, mittels der eintretende Lichtstrahlen, die im Wesentlichen senkrecht zur Ebene des Bodens 18 auftreffen, etwa rechtwinklig umgelenkt werden und durch Lichtleiter geleitet werden. Beabstandet von der ersten Lichtumlenkvorrichtung 42 sind mehrere zweite Lichtumlenkvorrichtungen 43 vorgesehen, die dafür sorgen, dass Licht von der ersten Lichtumlenkvorrichtung 42 umgelenkt und zu einer Auskoppelfläche 44 am Boden 18 geleitet wird.

Die Auskoppelfläche 44 ist gegenüber einer Öffnung 46 oder einem Fenster an einer Blende 47 angeordnet. Durch die Öffnung 46 gelangt das Licht zu einem Lichtdetektor 36 des Lesegerätes 35. Der Lichtdetektor 36 ist dabei geschützt hinter einer Scheibe 38 angeordnet.

An dem Boden 18 sind mehrere Auskoppelflächen 44 vorgesehen, vorzugsweise zwischen zwei und acht Auskoppelflächen 44, insbesondere vier Auskoppelflächen 44, so dass für jede Auskoppelfläche 44 ein Lichtdetektor 36 am Lesegerät 35 vorgesehen ist. Die Lichtdetektoren 36 sind dabei an einem Träger 37 gehalten und mit einer Steuerung der Vorrichtung 1 verbunden.

Es ist natürlich auch möglich, statt einer Lichtquelle 40 vier Lichtquellen vorzugsehen, die benachbart zu den Auskoppelflächen 44 angeordnet sind. Dann werden die Auskoppelflächen 44 zu Eintrittsflächen für das Licht und die mittig angeordnete Eintrittsfläche 41 wird zu einer Auskoppelfläche. Dann muss lediglich ein einziger Lichtdetektor benachbart zu der mittleren Eintrittsfläche 41 angeordnet werden, die dann zur Auskoppelfläche wird. Die Strahlungsrichtung des Lichtes wird bei diesem Ausführungsbeispiel umgekehrt. Dabei kann das Einstrahlen des Lichts zeitlich nacheinander erfolgen, so dass auch das Auslesen der einzelnen Lichtleiter 45 getrennt erfolgen kann.

Wird Licht über die Lichtquelle 40 in den Boden 18 eingestrahlt, kann ein vorbestimmter Kapseltyp erkannt werden, der an den Auskoppelflächen 44 wahlweise lichtdurchlässig ausgebildet ist, so dass an dem Lichtdetektor 36 reflektierendes Licht erfasst wird, oder die Auskoppelfläche 44 weist eine verminderte Lichtdurchlässigkeit auf. Hierfür kann an der Auskoppelfläche 44 eine Abdeckung 48, ein Etikett, eine Beschichtung oder ein anderes Mittel vorgesehen sein, um die Lichtdurchlässigkeit zu verringern. Hierfür kann die Oberfläche auch mechanisch, thermisch oder chemisch verändert sein, so dass der benachbart angeordnete Lichtdetektor 36 kein reflektiertes Licht empfängt.

Zur Verminderung der Lichtdurchlässigkeit ist es auch möglich, den Lichtleiter mit entsprechenden Mitteln zu versehen, beispielsweise durch ein oder mehrere Einschnitte. Auch diese Mittel am Lichtleiter können für eine Codierung der Kapsel verwendet werden.

Über das Lesegerät 35 wird somit ein bestimmter Kapseltyp erkannt, so dass für den Brühvorgang die Temperatur des einzuleitenden Wassers in die Brühkammer 6 und/oder die Brühzeit oder andere Parameter, wie die Einwirkzeit des Reinigungsmittels gesteuert werden können. Beispielsweise kann es für einen wirksamen Reinigungsvorgang sinnvoll sein, die Einwirkzeit nach dem Einleiten des heißen Wassers mindestens 1 Minute, vorzugsweise zwischen 2 und 6 Minuten zu wählen. Während der Einwirkzeit bleibt dann der Flüssigkeitspegel des gelösten Reinigungsmittels in der Brühkammer konstant.

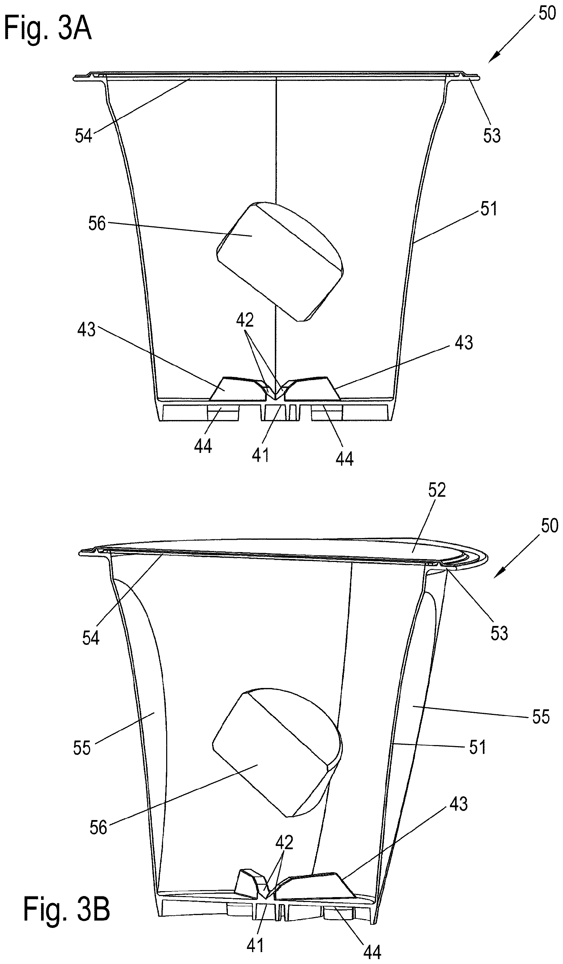

In den Figuren 3A und 3B ist eine Kapsel 50 dargestellt, die als Reinigungskapsel ausgebildet ist und ähnlich wie die Kapsel 15 in den Einwurfschacht 7 der Getränkezubereitungsmaschine der Figur 1 einfügbar ist. Die Kapsel 50 umfasst einen topfförmigen Behälter 51, der an einer Oberseite durch eine lösbare Abdeckung 52 verschlossen ist. Die Abdeckung 52 ist dabei an einem nach außen hervorstehenden Rand 53 des Behälters 51 fixiert, insbesondere gesiegelt. Die Abdeckung 52 kann als luft- und wasserundurchlässige Folie ausgebildet sein, beispielsweise aus Kunststoff oder Aluminium. Die Abdeckung 52 kann optional auch als wasserlösliche Folie ausgebildet sein.

Unterhalb der Abdeckung 52 ist ein Sieb 54, ein Gitter oder eine zumindest teilweise wasserlösliche Folie vorgesehen, das oder die die Öffnung des Behälters 51 ebenfalls überdeckt. Das Sieb 54 ist an dem nach außen hervorstehenden Rand 53 fixiert und sorgt dafür, dass ein Reinigungsmittel 56 in einen Innenraum der Kapsel 50 verbleibt, selbst wenn die Abdeckung 52 abgezogen wurde. Das Sieb 54 ist dabei luft- und wasserdurchlässig ausgebildet und ermöglicht somit einen Zugang zum Innenraum des Behälters 51.

Der Behälter 51 weist ferner Abflachungen 55 auf, die dazu dienen, die Kapsel 50 in einer vordefinierten Position in dem Einwurfschacht 7 einwerfen zu können. Auch andere Führungsmittel zur Positionierung der Kapsel 50 an dem Einwurfschacht 7 können vorgesehen sein.

An einem Boden der Kapsel sind die in Figur 2 schematisch dargestellten Eintrittsflächen 41 und Auskoppelflächen 44 vorgesehen, wobei diese über zwei Lichtumlenkvorrichtungen 42 und 43 derart miteinander gekoppelt sind, dass eintretende Lichtstrahlen über die beiden Lichtumlenkvorrichtungen 42 und 43 zu den Auskoppelflächen 44 geleitet werden, so dass austretendes Licht an den Auskoppelflächen 44 durch einen Lichtdetektor 36 des Lesegerätes 35 erfasst werden kann. Es ist auch möglich, an den Auskoppelflächen 44 jeweils eine Lichtquelle vorzusehen, mittels der dann über die Lichtumlenkvorrichtungen 42 und 43 Licht zu der mittleren Eintrittsfläche 41 geleitet werden kann, um dann benachbart zu der Eintrittsfläche 41 einen Lichtdetektor eines Lesegerätes vorzusehen. Die Eintrittsfläche und die Auskoppelflächen 44 sowie die Lichtumlenkvorrichtungen 42 und 43 bilden Identifizierungsmittel aus, damit die Vorrichtung 1 erkennt, welcher Typ einer Kapsel sich an der Brühkammer 6 befindet.

Wenn eine Kapsel 50 als Reinigungskapsel in dem Einwurfschacht 7 der Vorrichtung der Figur 1 benachbart zu der Brühkammer 6 positioniert ist, wird für einen Reinigungsvorgang zunächst heißes Wasser in die Brühkammer 6 eingeleitet, das dann durch das offene Sieb 54 in den Behälter 51 strömt. Dadurch löst sich das Reinigungsmittel auf und steht für den Reinigungsvorgang zur Verfügung.

Das Reinigungsmittel 56 kann in Tablettenform ausgebildet sein und einen oder mehrere Wirkstoffe enthalten, die gleichzeitig oder auch zeitversetzt nacheinander aufgelöst werden. Vorzugsweise sind verschiedene Wirkstoffe vorgesehen, die nacheinander aufgelöst werden, so wie dies für Spülmaschinentabs bekannt ist. Dann kann die Reinigung der Brühkammer in verschiedenen Reinigungsschritten erfolgen, wobei ein oder mehrmals heißes Wasser in die Brühkammer 6 eingeleitet werden kann. Das eingeleitete Wasser kann jeweils verschiedene Temperaturen aufweisen. Nach dem Reinigungsvorgang wird dann die Brühkammer 6 gespült, wobei die Kapsel 50 an der Brühkammer 6 verbleibt und ebenfalls durchspült wird. Die Reinigung kann nach einem automatischen Reinigungsprogramm ablaufen, das die Flüssigkeitsmenge, die Temperatur und die Zeit für den Reinigungsvorgang steuert. Der Reinigungsvorgang kann dabei ein- oder mehrstufig erfolgen, beispielsweise mit einer Reinigung und einer zusätzlichen Entkalkung. Nach dem Reinigungsvorgang wird dann die Kapsel 50 entfernt, eine abschließende Endspülung wird durchgeführt und die Vorrichtung 1 kann für die Zubereitung weiterer Getränke genutzt werden.

In dem dargestellten Ausführungsbeispiel ist ein topfförmiger Behälter 51 mit einem Reinigungsmittel 56 vorgesehen. Es ist auch möglich, das Reinigungsmittel 56 nur in einem Teilbereich des Behälters 51 vorzusehen, wobei die Bereiche über eine oder mehrere Trennwände unterteilt sein können.

### Bezugszeichenliste

- 1: Vorrichtung
- 2: Sammelbehälter
- 3: Auflage
- 4: Gefäß
- 5: Griffabschnitt
- 6: Brühkammer
- 7: Einwurfschacht
- 8: Antriebseinrichtung
- 11: Seitenwand
- 12: Kapselöffnung
- 13: Einlassleitung
- 14: Düse
- 15: Kapsel
- 16: Rand
- 17: Abschnitt
- 18: Boden
- 19: Halter
- 20: Öffnung
- 21: Innenraum
- 22: Auslass
- 23: Ventil
- 24: Leitung
- 25: Auslassstutzen
- 26: Durchführung
- 27: Leitelement
- 28: Sammelbecken
- 29: Sieb
- 31: Sieb
- 35: Lesegerät
- 36: Lichtdetektor
- 37: Träger
- 38: Scheibe
- 40: Lichtquelle
- 41: Eintrittsfläche
- 42: Lichtumlenkvorrichtung
- 43: Lichtumlenkvorrichtung
- 44: Auskoppelfläche
- 45: Lichtleiter
- 46: Öffnung
- 47: Blende
- 48: Abdeckung
- 50: Kapsel
- 51: Behälter
- 52: Abdeckung
- 53: Rand
- 54: Sieb
- 55: Abflachungen
- 56: Reinigungsmittel
- 80: Elektromotor
- 81: Spindel
- 82: Spindelmutter
- 83: Führung

## Patentansprüche

1. Kapsel (50) zur Reinigung einer Brühkammer einer Getränkezubereitungsmaschine, mit einem topfförmigen Behälter (51) mit einem nach außen hervorstehenden Rand (53), der an einer Oberseite über eine lösbare Abdeckung (52) verschlossen ist, und mindestens ein Reinigungsmittel (56) enthält, wobei an dem Behälter (51) unterhalb der Abdeckung (52) ein Sieb (54), ein Gitter oder eine wasserlösliche Folie vorgesehen ist, das oder die eine Öffnung des Behälters (51) überdeckt und an dem nach außen hervorstehenden Rand (53) fixiert ist und mittels dem das Reinigungsmittel (56) innerhalb des Behälters (51) gehalten ist.

2. Kapsel nach Anspruch 1, **dadurch gekennzeichnet, dass** ein wasserdurchlässiges Sieb (54) oder Gittervorgesehen ist, um ein Auflösen des Reinigungsmittels (56) durch Einströmen von Wasser in den Behälter (51) zu ermöglichen.

3. Kapsel nach Anspruch 1 oder 2, **dadurch gekennzeichnet, dass** das Reinigungsmittel (56) als Reinigungstablette, Reinigungsgranulat oder Pulver ausgebildet ist.

4. Kapsel nach Anspruch 3, **dadurch gekennzeichnet, dass** die Reinigungstablette mindestens zwei Wirkstoffe enthält, die beim Auflösen zeitversetzt nacheinander wirksam sind.

5. Kapsel nach einem der vorhergehenden Ansprüche, **dadurch gekennzeichnet, dass** die Kapsel (50) mindestens ein Identifizierungsmittel mit einer Eintrittsfläche (44) und einer Austrittsfläche (41) für Licht aufweist.

6. Kapsel nach Anspruch 5, **dadurch gekennzeichnet, dass** die Identifizierungsmittel an einem Boden des Behälters (51) vorgesehen sind.

7. Verfahren zum Reinigen einer Brühkammer (6) einer Getränkezubereitungsmaschine, mit den folgenden Schritten:
- Entfernen einer Abdeckung (52) an einer Kapsel (50) mit einem Reinigungsmittel (56), wobei unterhalb der Abdeckung (52) ein Sieb (54), ein Gitter oder eine wasserlösliche Folie vorgesehen ist;
- Positionieren der Kapsel (50) an oder in der Brühkammer (6);
- Im Wesentlichen druckloses Einbringen von heißem Wasser in die Brühkammer (6) und die Kapsel (50) und Auflösen des Reinigungsmittels;
- Verteilung der Reinigungslösung durch Strömung und Konvektion innerhalb der Kapsel (50) und Brühkammer (6);
- Einwirken lassen des aufgelösten Reinigungsmittels in der Brühkammer (6), und
- Spülen der Brühkammer (6).

8. Verfahren nach Anspruch 7, **dadurch gekennzeichnet, dass** die Einwirkzeit aufgelösten Reinigungsmittels nach dem Einbringen des heißen Wassers mindestens 1 Minute beträgt, vorzugsweise zwischen 2 Minuten und 6 Minuten.

9. Verfahren nach Anspruch 8, **dadurch gekennzeichnet, dass** während der Einwirkzeit der Füllstand des in Wasser gelösten Reinigungsmittels in der Brühkammer (6) im Wesentlichen konstant ist.

10. Verfahren nach einem der Ansprüche 7 bis 9, **dadurch gekennzeichnet, dass** das Spülen der Brühkammer (6) mit an oder in der Brühkammer (6) positionierter Kapsel (50) erfolgt.

11. Verfahren nach einem der Ansprüche 7 bis 10, **dadurch gekennzeichnet, dass** die Kapsel (50) an einer seitlichen Öffnung der Brühkammer (6) positioniert wird.

12. Verfahren nach einem der Ansprüche 7 bis 11, **dadurch gekennzeichnet, dass** die Kapsel nicht perforiert wird und das Einbringen von heißem Wasser über das Sieb (54), Gitter oder die zumindest teilweise aufgelöste Folie erfolgt.

13. Verfahren nach einem der Ansprüche 7 bis 12, **dadurch gekennzeichnet, dass** das Reinigungsmittel (5) mindestens zwei Wirkstoffe enthält, die zeitversetzt nacheinander aufgelöst werden.

14. Verfahren nach einem der Ansprüche 7 bis 13, **dadurch gekennzeichnet, dass** vor oder nach dem Positionieren der Kapsel (50) an der Brühkammer (6) eine automatische Erkennung der Kapsel (6) mittels mindestens einer Lichtquelle (40) und mindestens einem Lichtdetektor (36) erfolgt, die mit Identifizierungsmitteln (41, 44) an der Kapsel (50) zusammenwirken.

## Claims

1. Capsule (50) for cleaning a brewing chamber of a beverage preparation machine, comprising a cup-shaped container (51) having an outwardly projecting edge (53) which is sealed at an upper side by a releasable cover (52), and contains at least one cleaning agent (56), whereby a screen (54), a mesh or a water-soluble film is provided on the container (51) underneath the cover (52), which covers an opening of the container (51) and is fixed to the outwardly projecting edge (53) and by means of which the cleaning agent (56) is held within the container (51).

2. Capsule according to claim 1, **characterized in that** a water-permeable screen (54) or mesh is provided to allow dissolution of the cleaning agent (56) by the inflow of water into the container (51).

3. Capsule according to claim 1 or 2, **characterized in that** the cleaning agent (56) is designed as a cleaning tablet, cleaning granulate or powder.

4. Capsule according to claim 3, **characterized in that** the cleaning tablet contains at least two active substances which are successively effective in a time-delayed manner when dissolved.

5. Capsule according to one of the preceding claims, **characterized in that** the capsule (50) has at least one identification means with an inlet surface (44) and outlet surface (41) for light.

6. Capsule according to claim 5, **characterized in that** the identification means are provided at a bottom of the container (51).

7. Method for cleaning a brewing chamber (6) of a beverage preparation machine, comprising the following steps:
- removing a cover (52) on a capsule (50) with a cleaning agent (56), wherein a screen (54), a mesh or a water-soluble film is provided below the cover (52);
- positioning the capsule (50) on or in the brewing chamber (6);
- substantially pressureless introduction of hot water into the brewing chamber (6) and the capsule (50) and dissolution of the cleaning agent;
- distribution of the cleaning solution by flow and convection within the capsule (50) and brewing chamber (6);
- allowing the dissolved cleaning agent to act in the brewing chamber (6), and
- rinsing of the brewing chamber (6).

8. Method according to claim 7, **characterized in that** the exposure time of dissolved cleaning agent after introduction of the hot water is at least 1 minute, preferably between 2 minutes and 6 minutes.

9. Method according to claim 8, **characterized in that** during the exposure time, the filling level of the cleaning agent dissolved in water in the brewing chamber (6) is substantially constant.

10. Method according to one of the claims 7 to 9, **characterized in that** the rinsing of the brewing chamber (6) occurs with a capsule (50) positioned on or in the brewing chamber (6).

11. Method according to one of the claims 7 to 10, **characterized in that** the capsule (50) is positioned at a lateral opening of the brewing chamber (6).

12. Method according to one of the claims 7 to 11, **characterized in that** the capsule is not perforated and the introduction of hot water takes place via the screen (54), mesh or the at least partially dissolved film.

13. Method according to one of the claims 7 to 12, **characterized in that** the cleaning agent (5) contains at least two active ingredients, which are successively dissolved in a time-delayed manner.

14. Method according to one of the claims 7 to 13, **characterized in that** before or after the positioning of the capsule (50) on the brewing chamber (6) an automatic detection of the capsule (6) takes place by means of at least one light source (40) and at least one light detector (36), which interact with identification means (41, 44) on the capsule (50).

## Revendications

1. Capsule (50) de nettoyage d'une chambre à infusion d'une machine de préparation de boisson comportant un réceptacle (51) en forme de pot, ayant un bord (53) en relief vers l'extérieur dont le côté supérieur est fermé par un opercule amovible (52) et contenant au moins un agent de nettoyage (56),
le réceptacle (51) comportant sous l'opercule (52) un tamis (54), une grille ou un film soluble dans l'eau, et couvrant l'ouverture du réceptacle (51) en étant fixé au bord en relief (53) et retenant l'agent de nettoyage (56) dans le réceptacle (51).

2. Capsule selon la revendication 1,
**caractérisé en ce qu'**
elle comporte un tamis (54) perméable à l'eau ou une grille pour permettre la dissolution de l'agent de nettoyage (56) par l'arrivée de l'eau dans le réceptacle (51).

3. Capsule selon la revendication 1 ou 2,
**caractérisé en ce que**
l'agent de nettoyage (56) est une pastille de nettoyage, des granulés de nettoyage ou une poudre.

4. Capsule selon la revendication 3,
**caractérisée en ce que**
la pastille de nettoyage contient au moins deux agents actifs qui agissent successivement l'un après l'autre par dissolution décalée dans le temps.

5. Capsule selon l'une des revendications précédentes,
**caractérisée en ce que**
la capsule (50) comporte au moins un moyen d'identification avec une surface d'entrée (44) et une surface de sortie (41) pour la lumière.

6. Capsule selon la revendication 5,
**caractérisée en ce que**
les moyens d'identification sont prévus au fond du réceptacle (51).

7. Procédé de nettoyage d'une chambre à infusion (6) d'une machine de préparation de boisson comportant les étapes suivantes consistant à :
- enlever l'opercule (52) de la capsule (50) comportant l'agent de nettoyage (56), un tamis (54), une grille ou un film soluble dans l'eau étant prévu sous l'opercule (52),
- positionner la capsule (50) sur ou dans la chambre à infusion (6),
- introduire pratiquement sans pression, de l'eau chaude dans la chambre à infusion (6) et la capsule (50) et dissoudre l'agent de nettoyage,
- répartir la solution de nettoyage par circulation et convexion à l'intérieur de la capsule (50) et de la chambre à infusion (6),
- faire agir l'agent de nettoyage dissout dans la chambre à infusion (6), et
- rincer la chambre à infusion (6).

8. Procédé selon la revendication 7,
**caractérisé en ce que**
la durée d'action de l'agent de nettoyage dissout après introduction de l'eau chaude est d'au moins 1 minute et de préférence comprise entre 2 minutes et 6 minutes.

9. Procédé selon la revendication 8,
**caractérisé en ce que**
pendant la durée d'action, le niveau de remplissage de l'agent de nettoyage dissout dans l'eau dans la chambre à infusion (6) est pratiquement constant.

10. Procédé selon l'une des revendications 7 à 9,
**caractérisé en ce qu'**
on rince la chambre à infusion (6) avec la capsule (50) positionnée sur ou dans la chambre à infusion (6).

11. Procédé selon l'une des revendications 7 à 10,
**caractérisé en ce que**
la capsule (50) est positionnée contre une ouverture latérale de la chambre à infusion (6).

12. Procédé selon l'une des revendications 7 à 11,
**caractérisé en ce qu'**
on ne perfore pas la capsule et l'introduction de l'eau chaude se fait par l'intermédiaire du tamis (54) ou du film au moins partiellement dissout.

13. Procédé selon l'une des revendications 7 à 12,
**caractérisé en ce que**
l'agent de nettoyage (5) contient au moins deux agents actifs qui se dissolvent successivement de façon décalée dans le temps.

14. Procédé selon l'une des revendications 7 à 13,
**caractérisé en ce qu'**
avant ou après le positionnement de la capsule (50) dans la chambre à infusion (6), on a une reconnaissance automatique de la capsule (6) à l'aide d'au moins une source lumineuse (40) et au moins un photodétecteur (36) qui coopèrent avec la référence d'identification (41, 44) de la capsule (50).
